# EUROPEAN PATENT APPLICATION

(11) **EP 3 845 284 A1**
(43) Date of publication of application: **07.07.2021**
(21) Application number: 19855525.2
(22) Date of filing: 10.04.2019
(51) Int. Cl.: A63F 13/45, A63F 13/35, G06F 9/44

(54) **SERVER AND METHOD FOR PROVIDING GAME SERVICE ON BASIS OF CONTROL USING APPLICATION EXCLUDING GAME APPLICATION**

(30) Priority: 31.08.2018 KR 20180103521
(71) Applicant: Netmarble Corporation, Seoul 08379 (KR)
(72) Inventor: HWANG, Yeong Tae, Seoul 08379 (KR); LEE, Kyong Man, Seoul 08379 (KR)
(74) Representative: Perronace, Andrea
(86) International application number: PCT/KR2019/004263
(87) International publication number: WO 2020/045782

(57) **Abstract**

A game service providing server and method are disclosed. The game service providing server comprises: a communication unit for receiving a control command from a user terminal; a database for storing data related to a game service; and a processor for receiving the data from the database on the basis of the control command in order to control a process performed by the game service, performing calculations for the received data, and controlling the process on the basis of the performed calculation result, wherein the control command can be generated on the basis of a second application that is distinct from a first application for the game service.

## Description

### Technical Field

Example embodiments relate to a game service providing server and method.

### Background Art

A game service may be provided based on an application for a game service installed in a user terminal. A user may execute the application to control a game character or transmit a message through an interface provided in the application. The application for the game service may provide in real time a situation of the progress of a game through a graphical user interface (GUI), and thus great resources may be required for a run. Thus, in a case in which many other applications are executed, there may be a hindrance to playing the game. Also, in a case in which the application is not updated, the game service may not be readily provided.

### Disclosure of Invention

### Technical Solutions

According to an example embodiment, there is provided a game service providing server including a processor configured to receive data from a database based on a control instruction for controlling a process to be performed in a game service, perform an operation on the received data, control the process based on a result of the performed operation, and provide the game service based on a result of the controlling. The processor may provide the game service based on the control instruction generated based on a second application that provides a means of additionally generating the control instruction in addition to a first application that directly provides the game service.

The second application may require fewer resources for a run compared to the first application.

In a situation in which the first application is not executed in the user terminal, the processor may control the process based on the control instruction.

In a situation in which the first application is not installed in the user terminal, the processor may control the process based on the control instruction.

In a situation in which the first application installed in the user terminal is not updated to a current version, the processor may control the process based on the control instruction.

In a situation in which the first application installed in the user terminal is currently being updated, the processor may control the process based on the control instruction.

In a situation in which the first application installed in the user terminal is executed in a background of the user terminal, the processor may control the process based on the control instruction.

According to another example embodiment, there is provided a user terminal including a processor configured to generate a control instruction for controlling a process to be performed in a game service based on a user input, and a communication unit configured to transmit the generated control instruction to a game service providing server. The processor may generate the control instruction through a second application that provides a channel of additionally generating the control instruction in addition to a first application that directly provides the game service.

The user terminal may receive, from the game service providing server, data of a control result corresponding to the control instruction through the communication unit, and display the control result based on the received data of the control result.

In a situation in which the first application is not executed in the user terminal, the processor may generate the control instruction based on the user input received through the second application.

In a situation in which the first application is not installed in the user terminal, the processor may generate the control instruction based on the user input received through the second application.

In a situation in which the first application installed in the user terminal is of a previous version that precedes a current version, the processor may generate the control instruction based on the user input received through the second application.

In a situation in which the first application installed in the user terminal is currently being updated, the processor may generate the control instruction based on the user input received through the second application.

According to still another example embodiment, there is provided a user terminal including a processor configured to directly perform an operation required for providing contents provided in a game service, and a communication unit configured to transmit a result of the performed operation to a game service providing server. The processor may perform the operation based on a user input received through the second application that provides a means of performing the operation for the contents in addition to a first application that directly provides the game service.

The processor may perform the operation based on the second application, irrespective of whether the first application is installed in the user terminal.

In a situation in which the first application installed in the user terminal is currently being updated, the processor may perform the operation based on the second application.

The processor may perform the operation through the second application, irrespective of a version of the first application installed in the user terminal.

According to yet another example embodiment, there is provided a game service providing method performed by a game service providing server, the game service providing method including receiving a control instruction from a user terminal, and controlling a process to be performed in a game service based on the received control instruction. The control instruction may be generated based on a user input received through a second application that provides a means of generating the control instruction in addition to a first application that directly provides the game service.

According to further another example embodiment, there is provided a game service providing method performed by a user terminal, the game service providing method including receiving a user input based on a second application that provides a means of controlling a game service in addition to a first application that directly provides the game service, generating a control instruction for controlling a process to be performed in the game service based on the received user input, and transmitting the generated control instruction to a game service providing server. The second application may require fewer resources for a run compared to the first application.

According to further another example embodiment, there is provided a game service providing method performed by a user terminal, the game service providing method including directly performing an operation required for providing contents provided in a game service based on a second application that directly performs the operation for the contents in addition to a first application that directly provides the game service, and transmitting a result of the performed operation to a game service providing server. The second application may require fewer resources for a run compared to the first application.

### Brief Description of Drawings

FIG 1 is a diagram illustrating an example of a game service providing method according to an example embodiment.
FIG 2 is a diagram illustrating an example of a configuration of a network of a game service providing system according to an example embodiment.
FIG 3 is a diagram illustrating an example of an overall configuration of a game service providing server according to an example embodiment.
FIG 4 is a diagram illustrating an example of an overall configuration of a user terminal configured to control a game service through a second application according to an example embodiment.
FIG 5 is a flowchart illustrating an example of a game service providing method performed by a game service providing server according to an example embodiment.
FIG 6 is a flowchart illustrating an example of a game service providing method performed by a user terminal according to an example embodiment.
FIG 7 is a flowchart illustrating another example of a game service providing method performed by a user terminal according to an example embodiment.
FIG 8 is a flowchart illustrating an example of controlling a game service through a second application according to an example embodiment.
FIG 9 is a flowchart illustrating an example of controlling a game service based on an operation for contents performed based on a second application according to an example embodiment.

### Best Mode for Carrying Out the Invention

Hereinafter, some examples will be described in detail with reference to the accompanying drawings. However, various alterations and modifications may be made to the examples. Here, the examples are not construed as limited to the disclosure and should be understood to include all changes, equivalents, and replacements within the idea and the technical scope of the disclosure.

The terminology used herein is for the purpose of describing particular examples only and is not to be limiting of the examples. As used herein, the singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains based on an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

When describing the examples with reference to the accompanying drawings, like reference numerals refer to like constituent elements and a repeated description related thereto will be omitted. In the description of examples, detailed description of well-known related structures or functions will be omitted when it is deemed that such description will cause ambiguous interpretation of the present disclosure.

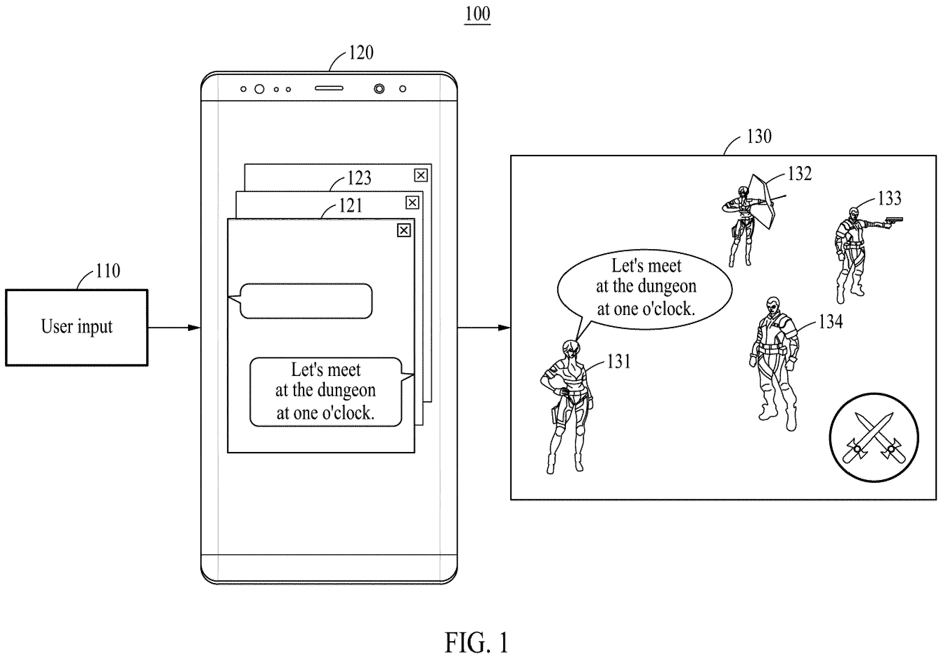

FIG 1 is a diagram illustrating an example of a game service providing method according to an example embodiment.

Referring to FIG. 1, a user terminal 120 may receive a user input 110, and control gameplay of a game character 131 of a user in a game service based on the received user input 110. The user terminal 120 may generate a control instruction for controlling a process to be performed in the game service through a second application 121 that provides a means of additionally generating the control instruction for controlling the game service in addition to a first application 123 that directly provides the game service. The process performed in the game service may include, for example, a process of controlling the gameplay of the game character 131 and a process of transmitting a chat message. In addition to these example processes, the process may include any process that the user performs in the game service.

The first application 123 may refer to a general game service application that provides a graphical user interface (GUI) corresponding to a screen 130 for the game service and displays in real time a situation of the progress of the game service.

The second application 121 may refer to an application that provides a means of generating a control instruction without a GUI such as the screen 130. The second application 121 may be run with fewer resources (e.g., less memory or power) through a simpler interface than the GUI. The user terminal 120 may receive the user input 110 through the second application 121 and generate the control instruction corresponding to the received user input 110. For example, as illustrated, the second application 121 may include an interface of a chat application. However, examples are not limited thereto, and it may include an interface that is run with fewer resources than ones required by the first application 123. For example, as shown in the screen 130, the user terminal 120 may generate a control instruction through the second application 121 to control an action of notifying a plan to guilder characters 132, 133, and 134 that is performed by the game character 131 of the user. The user terminal 120 may receive the user input 110 of a text form, generate the control instruction corresponding to the received user input 110, and transmit the generated control instruction to a game service providing server. Here, the game service providing server may refer to a server for providing a game service. The game service providing server may control the game service based on the received control instruction.

The user terminal 120 may perform verification for the second application 121 through an identifier (ID) for the game service. In addition, the user terminal 120 may perform a procedure of the verification for the second application 121 through an additional channel (e.g., SNS account-based login, messenger ID-based login, etc.).

Hereinafter, how a game service is provided will be described in detail with reference to the accompanying drawings.

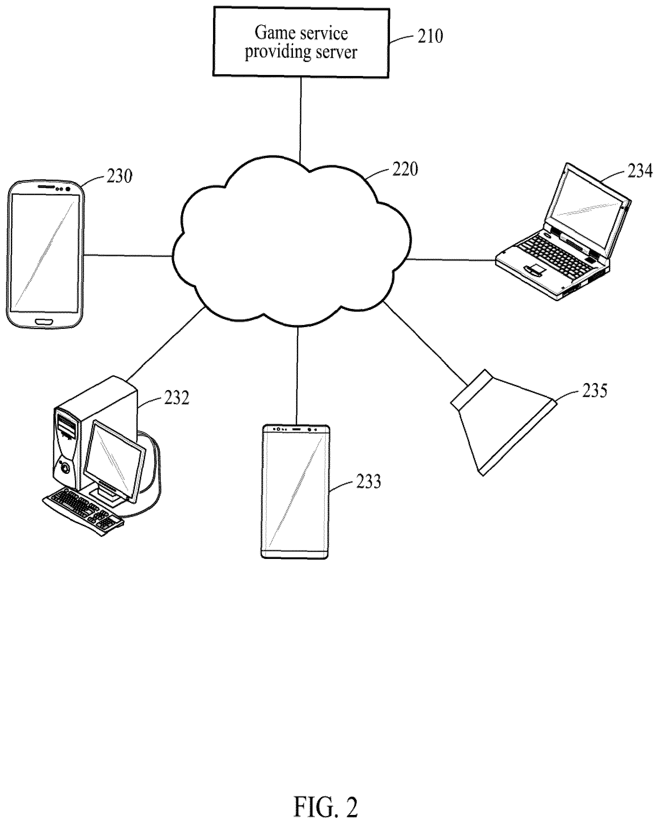

FIG 2 is a diagram illustrating an example of a configuration of a network of a game service providing system according to an example embodiment.

Referring to FIG 2, a game service providing system may be in a structure in which a game service providing server 210 and a plurality of user terminals 230, 232, 233, and 234 are connected through a communication network 220 such as the Internet. The game service providing server 210 may also be referred to as a web server and configured to provide an online service to the user terminals 230, 232, 233, and 234 through the communication network 220 such as the Internet. In addition, the game service providing system may control a game service based on an audio input received through an artificial intelligence (AI) speaker 235. For example, the AI speaker 235 may interwork with or be linked to a second application to generate a control instruction. The AI speaker 235 may receive a speech input of a user, generate a control instruction corresponding to the received speech input of the user, and provide the generated control instruction to the game service providing server 210. The game service providing server 210 may provide the game service based on the received control instruction.

Each of the user terminals 230, 232, 233, and 234 may be a terminal that has a communication function and accesses a server through a communication network, and be one of various electronic devices that are widely used by general users today, for example, a smartphone, a personal computer (PC), a tablet, a laptop, and the like. However, examples of which are not limited thereto, and a user terminal may include any communication device. The user terminals 230, 232, 233, and 234 may have a client program installed therein, and access the game service providing server 210 through the client program. The client program may include a first application corresponding to a general game application that includes a GUI corresponding to a game service, and a second application that provides a means of generating a control instruction without such a GUI corresponding to the game service.

The game service providing server 210 may perform an operation on data associated with the game service based on the control instruction received from the user terminals 230, 232, 233, and 234, and control operations or actions performed in the game service based on a result of the performed operation.

In general, the control instruction described herein may be generated based on a user input received through a first application that provides a GUI corresponding to a game service. The first application may require relatively great resources for a run because it provides the GUI. Also, in a case in which the game service is not updated to a current version, a user may not use the game service through the first application. Also, in a case in which the first application is being updated, the user may not use the game service until the update is completed.

However, according to an example embodiment, the user terminals 230, 232, 233, 234 may generate a control instruction for controlling a process performed in a game service through a second application that is run with fewer resources than the first application. The game service providing server 210 may control the game service based on the generated control instruction. Thus, it is possible to provide a means to control the game service with fewer resources.

In addition, the game service is controlled through the second application that is distinguished from the first application, and thus a user may control the game service even when the first application is not of its current version, the first application is currently being updated, or the first application is not installed in the user terminals 230, 232, 233, and 234.

The control instruction described herein may be generated based on a text input and a speech input, in addition to a touch input which is a traditional method generally used, and it is thus possible to provide a more convenient means to control the game service.

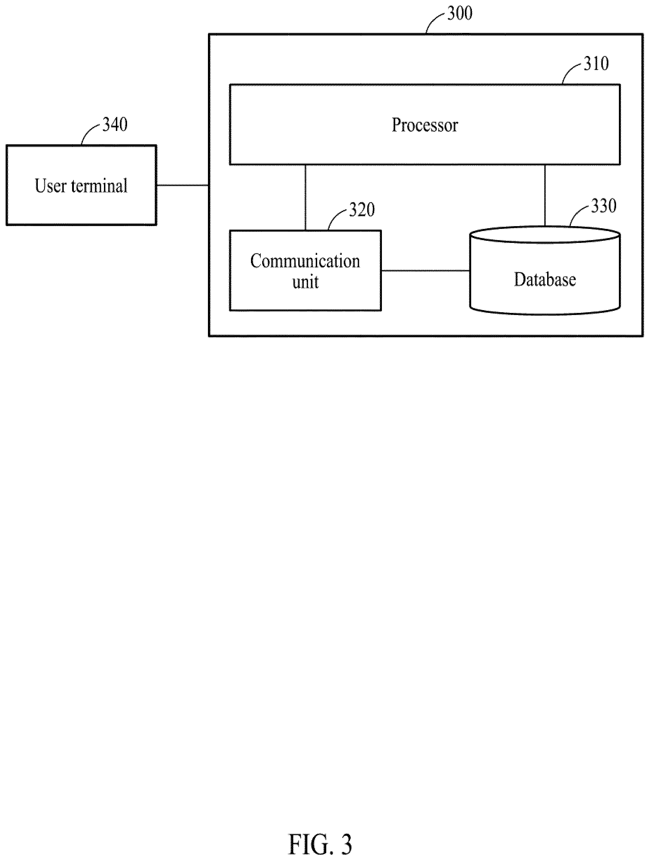

FIG 3 is a diagram illustrating an example of an overall configuration of a game service providing server according to an example embodiment.

According to an example embodiment, a game service providing server 300 includes a communication unit 320 configured to receive a control instruction from a user terminal 340, a database 330 configured to store therein data associated with a game service, and a processor 310 configured to perform an operation on the data stored in the database 330 to control a process to be performed in the game service.

Based on the control instruction received from the user terminal 340, the processor 310 may receive the data associated with the game service from the database 330, perform the operation on the received data, and control the process to be performed in the game service based on a result of the performed operation.

The process performed in the game service may be any type of processes that may be performed in the game service and include, for example, a process of attacking a certain monster by a game character of a user, a process of moving to a certain location, a process of transmitting a chat message, and the like.

The control instruction may be generated based on a second application that is distinguished from a first application corresponding to a general game application that directly provides the game service. As described above, the first application may be an application that includes a GUI generally provided in a game service, and the second application may be an application that generates a control instruction based on a user input and requires fewer resources for a run than the first application. For example, the second application may include an interface of a chat application type and be run based on less memory or power because it does not provide a GUI provided in a game service. Through the second application, the user terminal 340 may control the game service based on fewer resources compared to an existing method.

For example, in a case in which the first application is not executed in the user terminal 340, the processor 310 may control the process performed in the game service based on the control instruction generated based on the second application. In this example, even when the first application is not executed, a user may control a game character of the user through the second application. In such an example, the second application does not provide a screen for providing a situation of the progress of the game service, and thus it may not be possible to monitor in real time the situation of the progress of the game service. However, through an alarm indicating a control result which is a result of the controlling, the user may verify the control result. For example, in a case in which a region for monitoring a situation of the controlling is defined in a portion of a screen according to implementation of the second application, it is possible to verify the situation of the controlling in real time through the second application.

In a case in which the first application is not installed in the user terminal 340, the processor 310 may control the process performed in the game service based on the control instruction generated through the second application. The user terminal 340 may generate the control instruction to be transmitted to the game service providing server 300 through the second application, and thus the processor 310 may control the game character corresponding to a game account of the user even when the first application is not installed in the user terminal 340.

Also, in a case in which the first application installed in the user terminal 340 is not updated to a current version, the processor 310 may control the process performed in the game service based on the control instruction generated through the second application. The second application may perform an update by updating the data associated with the generation of the control instruction without updating all data associated with the game itself. Thus, the second application may require less memory and time for the updating compared to the first application. Thus, the processor 310 may control the game service based on the update of the second application even though the update of the first application is not performed.

Also, in a case in which the first application installed in the user terminal 340 is being currently updated, the processor 310 may control the process performed in the game service based on the control instruction generated through the second application. The user terminal 340 may generate the control instruction for controlling the game service through the second application in addition to the first application, and thus the processor 310 may control the game service based on the control instruction generated through the second application even though the update is being performed on the first application.

Also, in a case in which the first application installed in the user terminal 340 is executed in a background of the user terminal 340, the processor 310 may control the process performed in the game service based on the control instruction generated through the second application. Here, an application being executed in the background may indicate that, although the application is executed, the application is not executed on a main screen that is displayed on a screen of a user terminal, but is executed on a sub-screen (or a system end) that is not displayed on the user terminal.

According to another example embodiment, the processor 310 may update the data stored in the database 330 based on a result of the operation for contents received from the user terminal 340. Here, the contents described herein may refer to various services provided in the game service. The contents may include any services that may be provided in the game service, for example, a service that allows a game character of a user to go hunting to obtain an experience value, a service that allows a game character of a user to automatically attack under a preset condition, and the like, and may also be referred to as a simulation. The operation according to the progress of the contents may be performed through the second application installed in the user terminal 340. The processor 310 may update the data stored in the database 330 based on the result of the performed operation through the communication unit 320. Through such a data update, the processor 310 may apply a result of the progress of the contents to the game service.

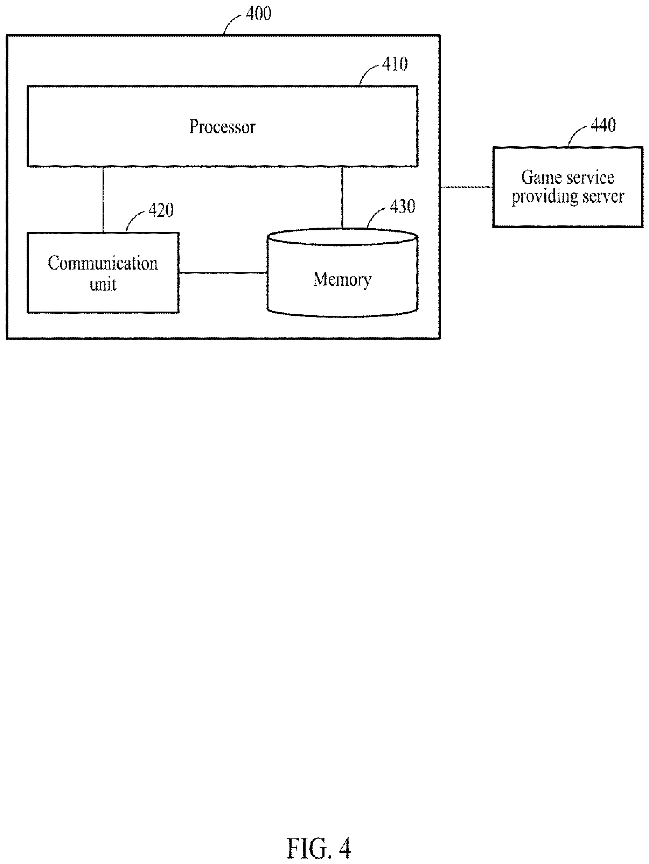

FIG 4 is a diagram illustrating an example of an overall configuration of a user terminal configured to control a game service through a second application according to an example embodiment.

According to an example embodiment, a user terminal 400 includes a processor 410 configured to generate a control instruction for controlling a process to be performed in a game service based on a user input, a communication unit 420 configured to transmit the generated control instruction to a game service providing server 440, and a memory 430 in which the generated control instruction and a second application for generating the control instruction for controlling the process performed in the game service are recorded.

The processor 410 may generate the control instruction through the second application that provides a means of additionally generating the control instruction in addition to a first application that directly provides the game service. The second application may have the same characteristics as described above.

The user terminal 400 may receive the user input by interworking with, for example, a smartwatch or an AI speaker. For example, the processor 410 may convert an audio input obtained through a smartwatch or an AI speaker to a text form based on a speech-to-text (STT) model, analyze a user's intention in a text obtained through the converting, and generate the control instruction based on a result of the analyzing. The generating of the control instruction may be implemented by the second application. For example, when a user inputs an audio instruction "move to a first dungeon" through a smartwatch, the processor 410 may convert the audio input obtained through the smartwatch to a text form through the second application, and generate a control instruction for moving a game character of the user to the first dungeon based on a text obtained through the converting.

In addition, the user terminal 400 may receive the user input by interworking with an additional chat application. For example, the second application may analyze a user's intension based on the user input of a text form that is obtained through the interworking chat application, and generate the control instruction based on a result of the analyzing.

The second application may interwork with or be linked with a plurality of game services to control each of the game services.

The user terminal 400 may receive data of a control result which is a result of the controlling corresponding to the control instruction from the game service providing server 440 through the communication unit 420, and then display the control result based on the received data of the control result. The user terminal 400 may display the control result through the second application. The control result may be provided in a form of a push message, but how it is provided may include a notifying method that is not limited to a certain method. For example, the control result may be provided as a message of a text form that reads, for example, "message requested has been transmitted," "simulation requested has been completed," and the like.

In a case in which the first application is not installed in the user terminal 400, the processor 410 may generate the control instruction for controlling the process of the game service through the second application. Also, in a case in which the first application is not executed in the user terminal 400 or the first application is executed in the background, the processor 410 may generate the control instruction through the second application.

Also, in a case in which a version of the first application installed in the user terminal 400 is not matched to a current version of the game service or the first application is currently being updated, the processor 410 may generate the control instruction through the second application.

Through the second application, the processor 410 may control the process of the game service based on fewer resources than those required for the first application. In addition, even in a case in which gameplay is not able to proceed depending on a situation of the first application, the user terminal 400 may control in real time the game service through the second application.

According to another example embodiment, the user terminal 400 may directly perform an operation required for a process of providing contents that are provided in a game service through the processor 410, and provide a result of the performed operation to the game service providing server 440 through the communication unit 420. The processor 410 may receive a user input through the second application that provides a means of directly performing the operation for the contents in addition to the first application that directly provides the game service, and directly perform the operation for the provision of the contents based on the received user input. For example, the user terminal 400 may receive a user input that determines contents for which an operation is to be performed through the second application, and directly perform the operation for the provision of the contents corresponding to the received user input through the second application.

The contents described herein may refer to various services provided in the game service.

The operation for the progress of the contents may be performed by the game service providing server 440 or the user terminal 400.

In a case in which the operation for the contents is performed by the game service providing server 440, for example, in a case of a massively multiplayer online role-playing game (MMORPG), the game service providing server 440 may perform the operation for the contents based on a control instruction generated by the user terminal 400, and apply a result of the operation to a database and thus apply a result of performing the contents to the game service.

In a case in which the operation for the contents is performed by the user terminal 400, for example, in a case of a game service in which not all multiple users participate, as in a one-on-one match, the user terminal 400 may directly perform the operation for the provision of the contents based on the first application or the second application, and provide a result of performing the operation to the game service providing server 440. The game service providing server 440 may apply the result of the operation to the database, thereby applying a result of performing the contents to the game service.

In a case in which the user terminal 400 performs the operation for the contents through the first application, various operations associated with a GUI for displaying the progress of the contents may need to be performed, and thus great resources (e.g., power and memory) may be required.

However, in a case in which the user terminal 400 performs the operation for the contents through the second application, an operation associated with a GUI may not need to be performed, and it is thus possible to perform an operation with fewer resources.

According to an example embodiment, in a case in which the first application is not installed in the user terminal 400, the processor 410 may perform the operation for the contents through the second application.

Also, in a case in which the first application installed in the user terminal 400 is currently being updated, the processor 410 may perform the operation for the contents through the second application.

Also, in a case in which a version of the first application installed in the user terminal 400 is not updated, the processor 410 may perform the operation for the contents through the second application.

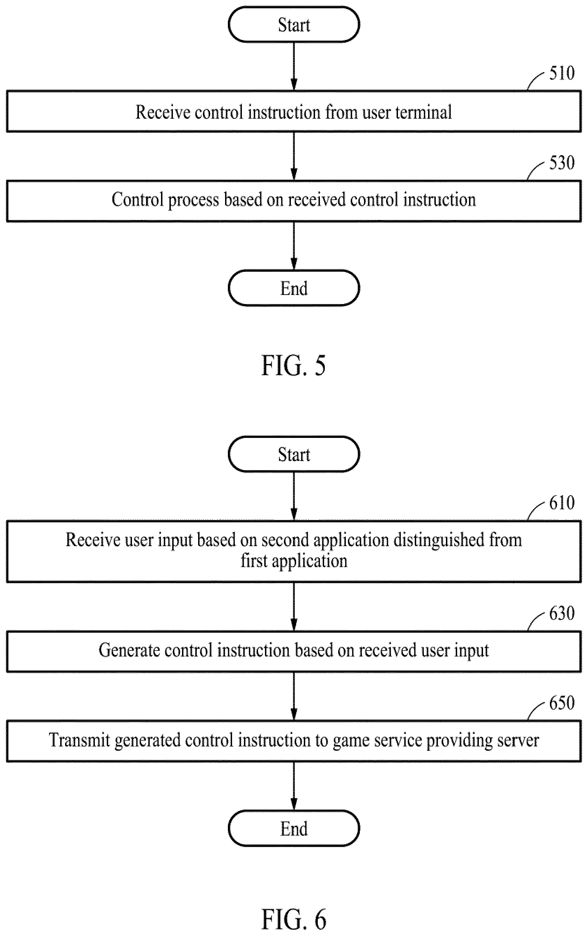

FIG 5 is a flowchart illustrating an example of a game service providing method performed by a game service providing server according to an example embodiment.

Referring to FIG 5, in operation 510, a game service providing server receives a control instruction from a user terminal.

In operation 530, the game service providing server controls a process to be performed in a game service based on the received control instruction. The control instruction may be generated based on a second application that provides a means of generating a control instruction, other than a first application corresponding to a general game application that directly provides the game service. The second application may require fewer resources for a run compared to the first application, and may interwork with or be linked to the game service through a verification procedure.

According to an example embodiment, the game service providing server may control the process performed in the game service based on the control instruction, irrespective of whether the first application is installed in the user terminal or not.

FIG 6 is a flowchart illustrating an example of a game service providing method performed by a user terminal according to an example embodiment.

Referring to FIG 6, in operation 610, a user terminal receives a user input based on a second application that provides a means of generating a control instruction, other than a first application corresponding to a general game application that provides a game service. As described above, the second application may require fewer resources for a run compared to the first application. The second application may also include characteristics described above.

In operation 630, the user terminal generates a control instruction for controlling a process to be performed in the game service based on the user input. For example, in a case in which the first application is not installed in the user terminal, the user terminal may generate the control instruction based on the second application. As described above, the user terminal may generate the control instruction through the second application, irrespective of whether the first application is executed or not or updated or not.

In operation 650, the user terminal provides the generated control instruction to the game service.

In addition, the user terminal may display a control result based on data associated with the control result that is received from a game service providing server.

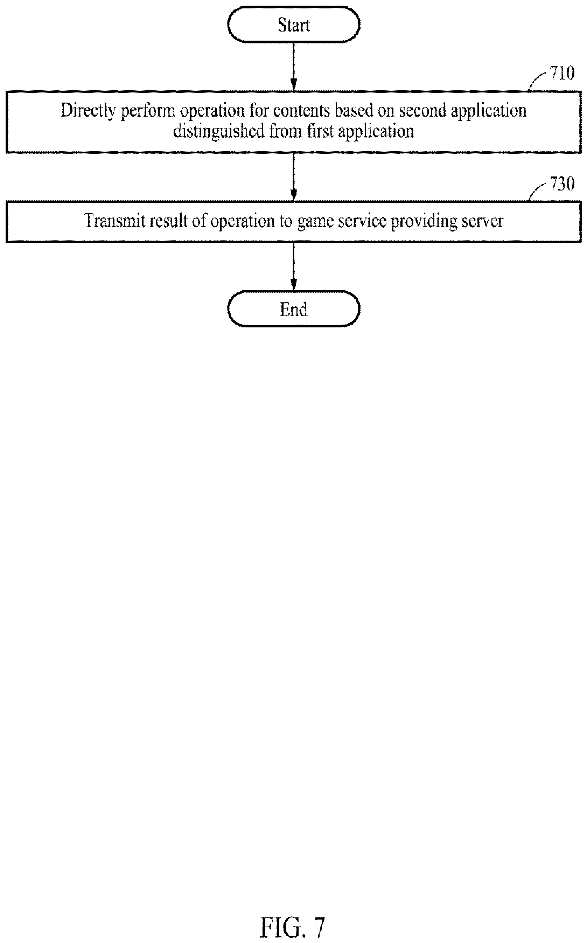

FIG 7 is a flowchart illustrating another example of a game service providing method performed by a user terminal according to an example embodiment.

Referring to FIG 7, in operation 710, a user terminal directly performs an operation for providing contents provided in a game service based on a second application that is distinguished from a first application corresponding to a general game application that directly provides the game service and directly performs the operation for the contents. The second application may require fewer resources for a run compared to the first application.

For example, in a case in which the first application is not installed in the user terminal, the user terminal may generate the operation for the contents based on the second application. In addition, the user terminal may perform the operation for the contents based on the second application, irrespective of a version of the first application installed in the user terminal.

In operation 730, the user terminal transmits a result of the performed operation to a game service providing server.

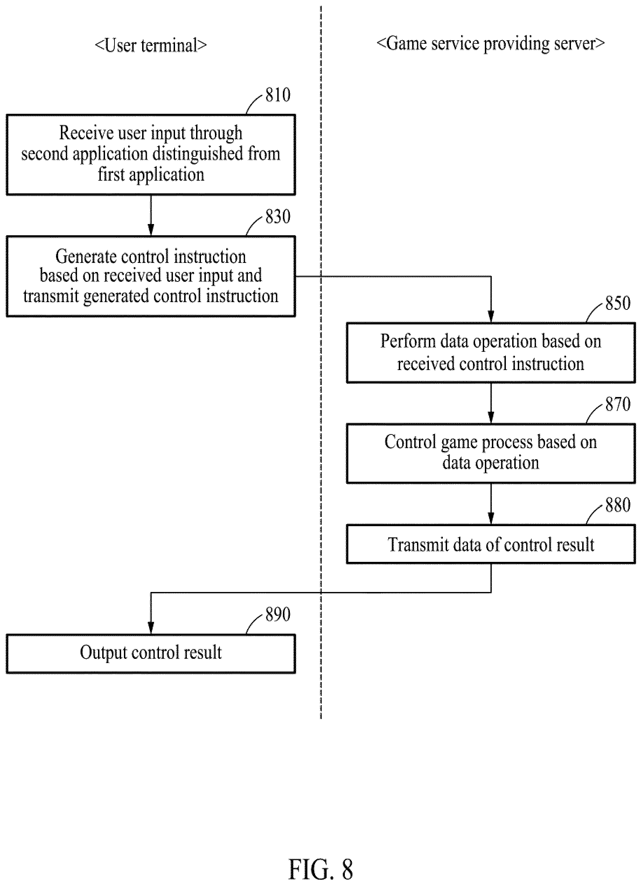

FIG 8 is a flowchart illustrating an example of controlling a game service through a second application according to an example embodiment.

Referring to FIG. 8, in operation 810, a user terminal receives a user input through a second application that is distinguished from a first application corresponding to a game service. In operation 830, the user terminal generates a control instruction based on the received user input and transmits the generated control instruction to a game service providing server. The user terminal may analyze an intention of the user input in a text or audio form, and generate the control instruction based on a result of the analyzing.

In operation 850, the game service providing server performs an operation on data associated with the provision of the game service based on the received control instruction.

In operation 870, the game service providing server controls a game process provided in the game service based on a result of performing such data operation. In operation 880, the game service providing server transmits, to the user terminal, data of a control result which is a result of the controlling. In operation 890, the user terminal outputs the control result based on the data of the control result.

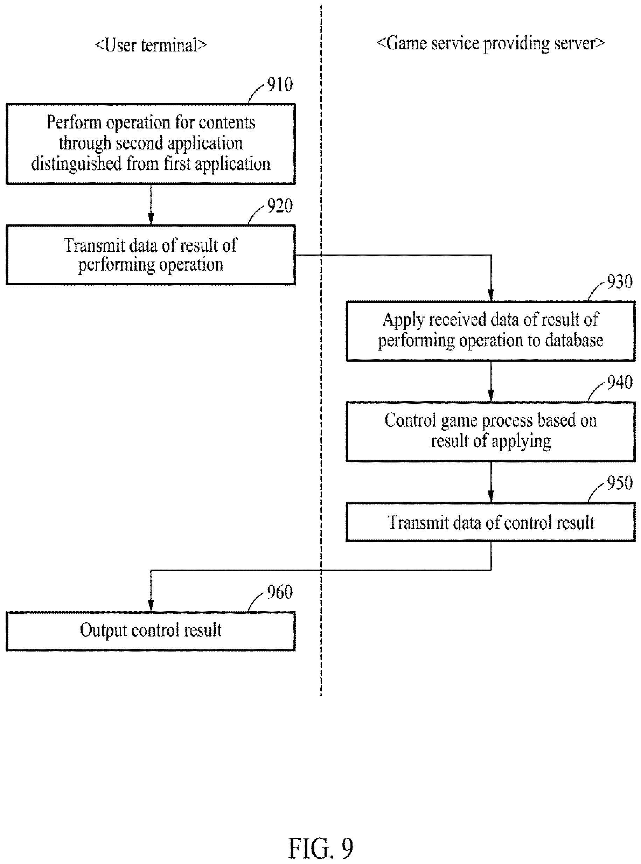

FIG 9 is a flowchart illustrating an example of controlling a game service based on an operation for contents performed based on a second application according to an example embodiment.

Referring to FIG 9, in operation 910, a user terminal performs an operation for contents through a second application that is distinguished from a first application. In operation 920, the user terminal transmits, to a game service providing server, data of a result of the performed operation. In operation 930, the game service providing server applies the received data of the result of the operation to data stored in a database. In operation 940, the game service providing server controls a game process based on a result of the applying.

In operation 950, the game service providing server transmits, to the user terminal, data of a control result which is a result of the controlling. In operation 960, the user terminal outputs the control result based on the data of the control result.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums. The non-transitory computer readable recording medium may include any data storage device that can store data which can be thereafter read by a computer system or processing device.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents.

Therefore, the scope of the disclosure is defined not by the detailed description, but by the claims and their equivalents, and all variations within the scope of the claims and their equivalents are to be construed as being included in the disclosure.

## Claims

1. A game service providing server, comprising:
a communication unit configured to receive a control instruction from a user terminal;
a database configured to store therein data associated with a game service; and
a processor configured to receive the data from the database based on the control instruction to control a process to be performed in the game service, perform an operation on the received data, control the process based on a result of the performed operation, and provide the game service based on a result of the controlling,
wherein the processor is configured to:
provide the game service based on the control instruction generated based on a second application that provides a means of additionally generating the control instruction in addition to a first application that directly provides the game service.

2. The game service providing server of claim 1, wherein the second application requires fewer resources for a run compared to the first application.

3. The game service providing server of claim 1, wherein the processor is configured to:
in a situation in which the first application is not executed in the user terminal, control the process based on the control instruction.

4. The game service providing server of claim 1, wherein the processor is configured to:
in a situation in which the first application is not installed in the user terminal, control the process based on the control instruction.

5. The game service providing server of claim 1, wherein the processor is configured to:
in a situation in which the first application installed in the user terminal is not updated to a current version, control the process based on the control instruction.

6. The game service providing server of claim 1, wherein the processor is configured to:
in a situation in which the first application installed in the user terminal is currently being updated, control the process based on the control instruction.

7. The game service providing server of claim 1, wherein the processor is configured to:
in a situation in which the first application installed in the user terminal is executed in a background of the user terminal, control the process based on the control instruction.

8. A user terminal, comprising:
a memory in which a second application for generating a control instruction for controlling a process to be performed in a game service is recorded;
a processor configured to generate the control instruction through the second application based on a user input; and
a communication unit configured to transmit the generated control instruction to a game service providing server,
wherein the processor is configured to:
generate the control instruction through the second application that provides a means of additionally generating the control instruction in addition to the first application that directly provides the game service.

9. The user terminal of claim 8, wherein the second application requires fewer resources for a run compared to the first application.

10. The user terminal of claim 8, configured to:
receive, from the game service providing server, data of a control result corresponding to the control instruction through the communication unit; and
display the control result based on the received data of the control result.

11. The user terminal of claim 8, wherein the processor is configured to:
in a situation in which the first application is not executed in the user terminal, generate the control instruction through the second application.

12. The user terminal of claim 8, wherein the processor is configured to:
in a situation in which the first application is not installed in the user terminal, generate the control instruction through the second application.

13. The user terminal of claim 8, wherein the processor is configured to:
in a situation in which the first application installed in the user terminal is of a previous version that precedes a current version, generate the control instruction through the second application.

14. The user terminal of claim 8, wherein the processor is configured to:
in a situation in which the first application installed in the user terminal is currently being updated, generate the control instruction through the second application.

15. A user terminal, comprising:
a memory in which a second application that directly performs an operation required for providing contents provided in a game service is recorded;
a processor configured to perform the operation through the second application; and
a communication unit configured to transmit a result of the performed operation to a game service providing server,
wherein the processor is configured to:
perform the operation based on a user input received through the second application that provides a means of performing the operation for the contents in addition to a first application that directly provides the game service.

16. The user terminal of claim 15, wherein the second application requires fewer resources for a run compared to the first application.

17. The user terminal of claim 15, wherein the processor is configured to:
in a situation in which the first application is not installed in the user terminal, perform the operation based on the user input received through the second application.

18. The user terminal of claim 15, wherein the processor is configured to:
in a situation in which the first application installed in the user terminal is currently being updated, perform the operation based on the user input received through the second application.

19. The user terminal of claim 15, wherein the processor is configured to:
perform the operation based on the user input received through the second application, irrespective of a version of the first application installed in the user terminal.

20. A game service providing method performed by a game service providing server, comprising:
receiving a control instruction from a user terminal; and
controlling a process to be performed in a game service based on the received control instruction,
wherein the control instruction is generated based on a user input received through a second application that provides a means of generating the control instruction in addition to a first application that directly provides the game service.

21. The game service providing method of claim 20, wherein the second application requires fewer resources for a run compared to the first application.

22. The game service providing method of claim 20, wherein the controlling comprises:
in a situation in which the first application is not installed in the user terminal, controlling the process based on the control instruction.

23. A game service providing method performed by a user terminal, comprising:
receiving a user input based on a second application that provides a means of controlling a game service in addition to a first application that directly provides the game service;
generating a control instruction for controlling a process to be performed in the game service based on the received user input; and
transmitting the generated control instruction to a game service providing server,
wherein the second application requires fewer resources for a run compared to the first application.

24. The game service providing method of claim 23, wherein the generating of the control instruction comprises:
in a situation in which the first application is not installed in the user terminal, generating the control instruction based on the user input received through the second application.
